# EUROPEAN PATENT APPLICATION

(11) **EP 4 571 809 A1**
(43) Date of publication of application: **18.06.2025**
(21) Application number: 24306855.8
(22) Date of filing: 04.11.2024
(51) Int. Cl.: H01H 85/30, H01H 37/76, H01C 7/12

(54) **SURGE PROTECTOR WITH ALARM SYSTEM**

(30) Priority: 14.12.2023 CN 202311726039
(71) Applicant: SCHNEIDER ELECTRIC INDUSTRIES SAS, 92500 Rueil-Malmaison (FR)
(72) Inventor: CHEN, Yu, Shanghai 201203 (CN); GAO, Jingxiang, Shanghai 201203 (CN); WANG, Hongliang, Shanghai 201203 (CN); LI, Xiaodong, Shanghai 201203 (CN); TANG, Biao, Shanghai 201203 (CN); NING, Weipeng, Shanghai 201203 (CN); JIN, Xikeer, Shanghai 201203 (CN); ZHONG, Xiangmin, Shanghai 201203 (CN)
(74) Representative: Manitz Finsterwald Patent- und Rechtsanwaltspartnerschaft mbB

(57) **Abstract**

An alarm system for a surge protector is proposed, which includes: a plurality of varistors; a plurality of fuse bars, each varistor being configured to be connected to a corresponding fuse bar via a solder joint; a plurality of pressing bar assemblies, and the fuse bar abuts against the pressing bar assembly when the corresponding solder joint is effective; a first spring group; a pressing plate having a plurality of through holes; a plurality of supporting pieces, each supporting piece passing through a corresponding through hole; a second spring group; a third spring; a microswitch; when the solder joint of one of the varistors fails, the corresponding fuse bar is detached from the pressing bar assembly, so that the pressing bar assembly moves in a first direction under an action of a corresponding first spring, so that the pressing bar assembly is out of abutment with the corresponding supporting piece, so that a corresponding second spring is released from the compressed state, and the supporting piece drives the pressing plate to move towards the pressing bar assembly to release a button.

## Description

### TECHNICAL FIELD

The present invention relates to an alarm system for surge protectors, and more specifically, to an alarm system capable of warning the failure of solder joints in surge protectors.

### BACKGROUND

In a surge protector, varistors are electrically connected with the external circuit through solder joints. When a solder joint fails (for example, melts) due to high temperature, the surge protector cannot work normally, and it is necessary to send an alarm to inform the staff to repair or replace the varistor.

In the existing art, each varistor is provided with a corresponding microswitch, and the solder joint state (normal or failure) of each varistor has a corresponding relationship with the state of the microswitch. When the solder joint of a varistor fails, the state of the corresponding microswitch can change, and then the information of solder joint failure can be transmitted to the corresponding staff. However, for the above alarm system, one microswitch is required for each varistor, while the cost of the microswitch is relatively high, which thus greatly increases the cost of the alarm system for a surge protector including multiple varistors.

Therefore, it is expected to propose an alarm system for surge protectors, which can resolve the above-mentioned defects in the existing art.

### SUMMARY

According to a first aspect of the present invention, an alarm system for a surge protector is provided, including: a varistor module including a plurality of varistors, each varistor having a main body and a solder joint protruding from the main body; a plurality of fuse bars electrically connected with an external circuit, each varistor configured to be connected to a corresponding fuse bar via the solder joint; a plurality of pressing bar assemblies respectively arranged around a corresponding varistor, each fuse bar abutting against a corresponding pressing bar assembly when the corresponding solder joint is effective, so as to block the movement of the corresponding pressing bar assembly; a first spring group including a plurality of first springs extending in a first direction, each first spring abutting against a corresponding pressing bar assembly and configured to bias the corresponding pressing bar assembly in the first direction; a pressing plate provided with a plurality of through holes, each through hole corresponding to a corresponding pressing bar assembly; a plurality of supporting pieces, each supporting piece passing through a corresponding through hole and abutting against a corresponding pressing bar assembly when the corresponding solder joint is effective; a second spring group including a plurality of second springs extending in a second direction perpendicular to the first direction, each second spring configured to bias a corresponding supporting piece toward a corresponding varistor; a third spring configured to bias the pressing plate toward a microswitch, a force of a second spring on the pressing plate being greater than a force of the third spring on the pressing plate; a microswitch including a button and arranged at a side of the pressing plate away from the pressing bar assemblies, and the pressing plate presses or releases the button to switch the microswitch between a first state and a second state, when the button is pressed, the microswitch is in the first state, and when the button is released, the microswitch is in the second state; when the solder joint of one of the varistors fails, the corresponding fuse bar is detached from the pressing bar assembly, so that the pressing bar assembly moves in the first direction under an action of the corresponding first spring, so that the pressing bar assembly is out of abutment with the corresponding supporting piece, so that the corresponding second spring is released from the compressed state, and the supporting piece drives the pressing plate to move towards the pressing bar assembly to release the button.

According to this solution, for a surge protector including multiple varistors, only one microswitch is needed to realize the alarm function of solder joint failure of varistors, thus greatly reducing the cost of the alarm system.

In some solutions, each supporting piece may have a boss protruding perpendicular to the second direction, and the boss is arranged on a side of the pressing plate away from the pressing bar assemblies, and when the solder joint fails, the boss abuts against the pressing plate under the action of the second spring.

In some solutions, the pressing bar assembly may include a first part and a second part, when the corresponding solder joint is effective, the fuse bar abuts against the first part of the corresponding pressing bar assembly, each first spring abuts against the first part of the corresponding pressing bar assembly, and each supporting piece abuts against the second part of the corresponding pressing bar assembly, and the first part and the second part form a T-shaped structure.

In some solutions, the solder joint can be arranged on a side of the varistor away from the supporting piece.

In some solutions, the alarm system may further include a torsion spring, and when a solder joint fails, the fuse bar is detached from the first part of the pressing bar assembly under the action of the torsion spring, thereby allowing the pressing bar assembly to move under the action of the first spring.

In some solutions, the alarm system may further include a limiting component disposed on a side of the pressing plate far away from the pressing bar assemblies to limit excessive movement of the pressing plate toward the button.

According to such solutions, the limiting component can prevent the pressing plate from pressing the button of the microswitch excessively to damage the microswitch.

In some solutions, the alarm system may further include a PCBA board, which is electrically connected with the microswitch.

In some solutions, the alarm system may further include an indicator communicatively coupled with the PCBA board for indicating the status of the microswitch.

In some solutions, the indicator may be a light, which does not emit light when the microswitch is in the first state and emits light when the microswitch is in the second state.

According to a second aspect of the present invention, a surge protector is proposed, including the alarm system according to the first aspect of the present invention.

According to this solution, even if the surge protector includes multiple varistors, only one microswitch is needed to achieve the alarm function of solder joint failure, thus greatly reducing the manufacturing cost of the surge protector.

In some solutions, the surge protector may include four varistors, of which three varistors are connected to the live wire and the other varistor is connected to the neutral wire.

### BRIEF DESCRIPTION OF THE DRAWINGS

Fig. 1 shows a schematic front view of an alarm system according to an embodiment of the present invention;
Fig. 2 shows a schematic rear view of an alarm system according to an embodiment of the present invention;
Fig. 3 shows a schematic rear view of an alarm system according to an embodiment of the present invention, in which a solder joint is in the failure state;
Fig. 4 shows a schematic top view of an alarm system according to an embodiment of the present invention.

Reference numerals: 100 alarm system, 110 varistor, 112 main body, 114 solder joint, 120 fuse bar, 130 pressing bar assembly, 132 first part, 134 second part, 140 first spring, 150 pressing plate, 152 through hole, 160 supporting piece, 162 boss, 170 second spring, 174 third spring, 180 microswitch, 182 button, 190 PCBA board.

### DETAILED DESCRIPTION OF THE EMBODIMENTS

In order to make the purpose, solution and advantages of the technical solution of the present invention clearer, the technical solution of the embodiments of the present invention will be described clearly and completely with the attached drawings of a specific embodiment of the present invention. Unless otherwise specified, the terms used herein have the ordinary meaning in the art. In the drawings, the same reference numerals represent the same parts. The up, down, left and right directions in the drawings and the following description are only exemplary and are not intended to limit the orientation of any component in the system.

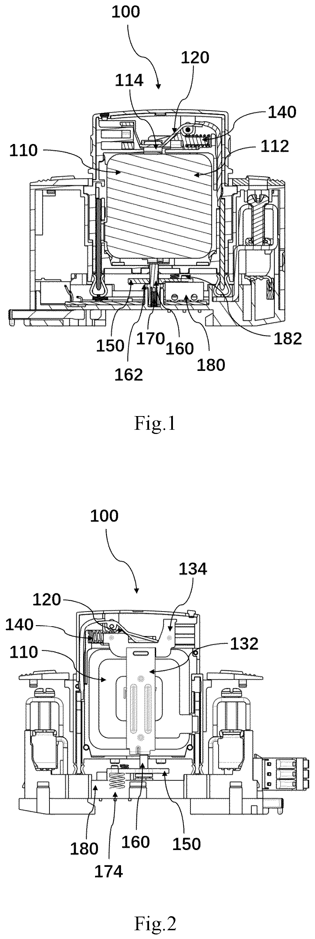

Fig. 1 shows a schematic front view of an alarm system 100 for a surge protector according to an embodiment of the present invention. The alarm system 100 mainly includes a plurality of varistors 110, a plurality of fuse bars 120 corresponding to the plurality of varistors 110 and electrically connected with an external circuit, pressing bar assemblies 130 arranged around the varistors 110, first springs 140, supporting pieces 160, second springs 170, a pressing plate 150 and a third spring 174. The surge protector may include four varistors 110, of which three varistors are connected to the live wire and the other varistor is connected to the neutral wire. It should be understood that the number of varistors 110 in the surge protector described above is only exemplary, and the present invention does not intend to limit the number of varistors 110 included in the surge protector. For example, the surge protector may include two varistors, forming a 2P structure. Alternatively, the surge protector may include three varistors, forming a 3P or 3PN structure.

Each varistor 110 has a main body 112 and a solder joint 114 protruding from the main body 112, and is configured to be connected to a corresponding fuse bar 120 via the solder joint 114. The fuse bar 120 abuts against a pressing bar assembly 130 when the corresponding solder joint 114 is not failed, so as to block the movement of the pressing bar assembly 130. The first springs 140 extend in a first direction (e.g., the left-right direction as shown in Figure 1) and each abuts against a corresponding pressing bar assembly 130 to bias the corresponding pressing bar assembly 130 in the first direction. The pressing plate 150 has a plurality of through holes 152 each corresponding to a corresponding pressing bar assembly 130. The supporting pieces 160 each passes through a corresponding through hole 152 and abuts against the corresponding pressing bar assembly 130 when the corresponding solder joint 114 is not failed. The second springs 170 extend in a second direction (e.g., up-down direction as shown in Figure 1) perpendicular to the first direction (e.g., left-right direction as shown in Figure 1) and is configured to each bias the corresponding supporting piece 160 toward the corresponding varistor 110. The microswitch 180 includes a button 182 and is arranged on a side of the pressing plate 150 away from the pressing rod assemblies 130. The pressing plate 150 presses or releases the button 182 to switch the microswitch 180 between a first state and a second state. When the button 182 is pressed, the microswitch 180 is in the first state, and when the button 182 is released, the microswitch 180 is in the second state. The third spring 174 is configured to bias the pressing plate 150 toward the microswitch 180.

According to the above arrangement, when the respective solder joints 114 of all the varistors 110 of the plurality of varistors are in the normal state, the fuse bars 120 are fixed to the respective solder joints 114 so as to block the left-right movement of the pressing bar assemblies 130, and another end of each pressing bar assembly 130 further blocks the upward movement of respective supporting piece 160 so that the supporting pieces 160 do not contact the pressing plate 150 (preferably, there is a gap between a boss 162 of each supporting piece 160 and the pressing plate 150) and the pressing plate 150 cannot be pushed upward, so that the pressing plate 150 is kept in a position of pressing the button 182 of the microswitch 180, so that the microswitch 180 is kept in the first state. On the other hand, when the solder joint 114 of any one of the varistors 110 of the plurality of varistors fails, the corresponding fuse bar 120 is detached from the pressing bar assembly 130 and no longer blocks the movement of the pressing bar assembly 130, so that the pressing bar assembly 130 moves in the first direction (e.g., the left-right direction as shown in Figure 1) under the action of the corresponding first spring 140, so that the pressing bar assembly 130 is out of abutment with the corresponding supporting piece 160, so that the corresponding second spring 170 is released from the compressed state. Because the force of a second spring 170 on the pressing plate 150 is greater than the force of the third spring 174 on the pressing plate 150, the supporting piece 160 drives the pressing plate 150 to move toward the pressing bar assemblies (i.e., move upward in Figure 1) to release the button 182 of the microswitch 180, so that the microswitch 180 switches from the first state to the second state.

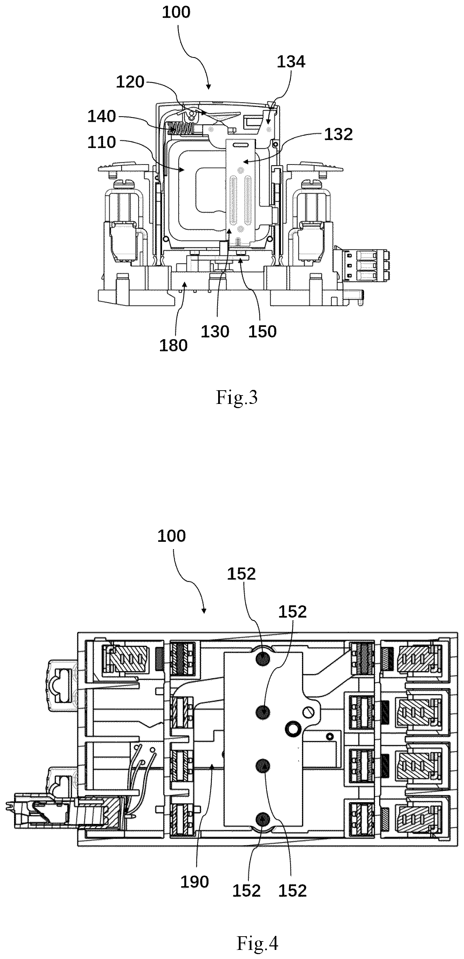

In other words, as shown in Figure 1, when the solder joint 114 of a varistor 110 does not fail, the fuse bar 120 constrains the freedom of the left-right movement of the pressing bar assembly 130, so that the pressing bar assembly 130 constrains the freedom of the upward movement of the supporting piece 160. As shown in Figure 3, when the solder joint 114 of a varistor 110 fails, the constrained degree of freedom is released, so that the supporting piece 160 drives the pressing plate 150 to move upward, thereby releasing the button 182 pressed by the pressing plate 150, and further switching the state of the microswitch 180. It is worth noting that as long as the solder joint 114 of any one of the varistors 110 fails (without the need for the solder joints 114 of the plurality of varistors 110 to fail), the pressing plate 150 can move upward under the drive of the corresponding released supporting piece 160 to switch the state of the microswitch 180. In this way, the monitoring of the solder joint states of the plurality of varistors 110 is achieved by only one microswitch 180, thereby greatly reducing the manufacturing cost of the alarm system 100.

It should be understood that, the first spring 140 that drives the pressing bar assembly 130 to move in the first direction after the solder joint 114 of the varistor 110 fails is only exemplary, and any other suitable driving component may be used to drive the pressing bar assembly 130 to move in the first direction. Similarly, the second spring 170 that drives the supporting piece 160 to move in the second direction after the solder joint 114 of the varistor 110 fails is only exemplary, and any other suitable driving component may be used to drive the supporting piece 160 to move in the second direction. Furthermore, the third spring 174 configured to bias the supporting piece 160 toward the microswitch 180 is only exemplary, and any other suitable biasing component may be used to bias the supporting piece 160 toward the microswitch 180.

Optionally, each supporting piece 160 may have a boss 162 protruding perpendicular to the up-down direction, and the boss 162 is arranged on the side of the pressing plate 150 away from the pressing bar assemblies 130 (i.e., the lower side of the pressing plate 150 shown in Figure 1) and can abut against the pressing plate 150 under the action of the second spring 170 to drive the pressing plate 150 to move upward.

Optionally, as shown in Figure 2, the pressing bar assembly 130 may include a first part 132 and a second part 134. When the corresponding solder joint 114 is effective, the fuse bar 120 abuts against the first part 132 of the corresponding pressing bar assembly 130, each first spring 140 abuts against the first part 132 of the corresponding pressing bar assembly 130, and each supporting piece 160 abuts against the second part 134 of the corresponding pressing bar assembly 130. The first part 132 and the second part 134 form a T-shaped structure. The first part 132 and the second part 134 may be connected together by any suitable means, such as riveting. Optionally, the solder joint 114 of a varistor 110 may be arranged on a side of the varistor 110 away from the supporting piece 160 (for example, the upper side shown in Figure 1).

Optionally, the alarm system 110 may further include a torsion spring. When the solder joint 114 of a varistor 110 fails, the fuse bar 120 may be detached from the first part 132 of the pressing bar assembly 130 under the action of the torsion spring, thereby allowing the pressing bar assembly 130 to move under the action of the first spring 140. Preferably, the alarm system 110 may further include a limiting part, which is arranged on a side of the pressing plate 150 away from the pressing bar assembly 130 (for example, the lower side shown in Figure 1) to limit excessive movement of the pressing plate 150 toward the button 182 of the microswitch 180, so as to prevent the pressing plate 150 from excessively pressing the button 182 of the microswitch 180 and thereby causing unnecessary damage to the microswitch 180.

Preferably, the alarm system 100 may further include a PCBA board 190 electrically connected with the microswitch 180 and an indicator communicatively coupled with the PCBA board for indicating the state of the microswitch 180. Optionally, the indicator may be a light, which does not emit light when the microswitch 180 is in the first state and emits light when the microswitch 180 is in the second state. It should be understood that the present invention is not intended to limit the specific type of indicator, and the indicator may be any other suitable device capable of transmitting signals to the staff, such as a speaker.

A number of exemplary embodiments of the present invention have been described in detail herein with reference to preferred embodiments. However, those skilled in the art can understand that various variations and modifications can be made to the above specific embodiments without departing from the inventive concept, and various technical features and structures proposed by the present invention can be combined without exceeding the scope of protection of the present invention, which is determined by the appended claims.

## Claims

1. An alarm system **characterized in that** the alarm system is for a surge protector and comprises:
a varistor module comprising a plurality of varistors, each varistor having a main body and a solder joint protruding from the main body;
a plurality of fuse bars electrically connected with an external circuit, each varistor configured to be connected to a corresponding fuse bar via the solder joint;
a plurality of pressing bar assemblies respectively arranged around a corresponding varistor, each fuse bar abutting against a corresponding pressing bar assembly when the corresponding solder joint is effective, so as to block the movement of the corresponding pressing bar assembly;
a pressing plate with a plurality of through holes, each through hole corresponding to a corresponding pressing bar assembly, and the pressing plate is biased towards a microswitch under an action of a biasing component;
a plurality of supporting pieces, each supporting piece passing through a corresponding through hole and abutting against a corresponding pressing bar assembly when the corresponding solder joint is effective;
a microswitch comprising a button and arranged at a side of the pressing plate away from the pressing rod assemblies, wherein the pressing plate presses or releases the button to switch the microswitch between a first state and a second state, wherein the microswitch is in the first state when the button is pressed and in the second state when the button is released;
wherein, when the solder joint of any one of the plurality of varistors fails, the corresponding fuse bar is detached from the pressing bar assembly, so that the pressing bar assembly moves in a first direction under an action of a corresponding first driving component, so that the pressing bar assembly is out of abutment with the corresponding supporting piece, so that the supporting piece drives the pressing plate to move towards the pressing bar assemblies under an action of a corresponding second driving component so as to release the button.

2. The alarm system according to claim 1, **characterized in that** the first driving component is a first spring, wherein the first spring extends in the first direction, the first spring abuts against the corresponding pressing bar assembly and is configured to bias the corresponding pressing bar assembly in the first direction.

3. The alarm system according to claim 2, **characterized in that** the second driving component is a second spring, wherein the second spring extends in a second direction perpendicular to the first direction, and the second spring is configured to bias the corresponding supporting piece toward the corresponding varistor.

4. The alarm system according to claim 3, **characterized in that** the biasing component is a third spring.

5. The alarm system according to claim 3, **characterized in that** each supporting piece has a boss protruding perpendicular to the second direction, and the boss is arranged on a side of the pressing plate away from the pressing bar assemblies, and when the solder joint fails, the boss abuts against the pressing plate under the action of the second spring.

6. The alarm system according to claim 1, **characterized in that** the pressing bar assembly comprises a first part and a second part, when the corresponding solder joint is effective, the fuse bar abuts against the first part of the corresponding pressing bar assembly, each of the first springs abuts against the first part of the corresponding pressing bar assembly, and each of the supporting pieces abuts against the second part of the corresponding pressing bar assembly, and the first part and the second part form a T-shaped structure.

7. The alarm system according to claim 1, **characterized in that** the solder joint is arranged on a side of the varistor away from the supporting piece.

8. The alarm system according to claim 6, **characterized in that** the alarm system further comprises a torsion spring, and when the solder joint fails, the fuse bar is detached from the first part of the pressing bar assembly under an action of the torsion spring, thereby allowing the pressing bar assembly to move under the action of the first spring.

9. The alarm system according to claim 1, **characterized in that** the alarm system further comprises a limiting component, wherein the limiting component is arranged at a side of the pressing plate away from the pressing bar assemblies to limit an excessive movement of the pressing plate towards the button.

10. The alarm system according to claim 1, **characterized in that** the alarm system further comprises a PCBA board which is electrically connected with the microswitch.

11. The alarm system according to claim 10, **characterized in that** the alarm system further comprises an indicator communicatively coupled with the PCBA board for indicating the state of the microswitch.

12. The alarm system according to claim 11, **characterized in that** the indicator is a light, wherein the light does not emit light when the microswitch is in the first state and emits light when the microswitch is in the second state.

13. A surge protector, **characterized in that** the surge protector comprises the alarm system according to any one of claims 1 to 12.

14. The surge protector according to claim 13, **characterized in that** the surge protector comprises four varistors, of which three varistors are connected to the live wire and the other varistor is connected to the neutral wire.
